# EUROPEAN PATENT APPLICATION

(11) **EP 2 265 065 A1**
(43) Date of publication of application: **22.12.2010**
(21) Application number: 09290465.5
(22) Date of filing: 18.06.2009
(51) Int. Cl.: H04W 60/00

(54) **Method and equipment for managing the attachment process of a mobile equipment to a base station**

(71) Applicant: Alcatel Lucent, 75008 Paris (FR)
(72) Inventor: Conte, Alberto, 94230 Cachan (FR); Leclerc, Brice, 91290 Arpajon (FR)
(74) Representative: Croonenbroek, Thomas Jakob

(57) **Abstract**

The present invention refers to a method for managing the attachment process of a mobile equipment to a base station wherein the attachment process is configured by a call from the mobile equipment toward the line to which said base station is connected.

## Description

### BACKGROUND OF THE INVENTION

The present invention relates to the field of communication networks and more particularly to the attachment process of mobile equipments onto base stations.

Communication network technology is in constant evolution in order to match with the customers needs. This evolution has led to the development of pico base stations (PBS) and femto base stations (FBS) located in customers places and providing a local access in a limited area defined respectively as pico cells and femto cells. Such PBS and/or FBS may be used at home for privacy use and in a building such as an hotel or a restaurant. Thus, said PBS and FBS provide high throughput and reduced bills to the customers while allowing the operators to unload their macro cell networks.

Nevertheless, the attachment of a mobile equipment to a PBS or a FBS is not always automatically achieved due to different reasons:
- the received signal strength indicator (RSSI) of another (macro) cell may be higher than the one of the pico or femto cell, therefore the mobile equipment may get automatic attachment to the other (macro) cell;
- the pico or femto base station may not appear in the neighbor list of the user equipment for privacy reason or because operators of the base station and the mobile equipment are different;
- the access to the base station is restricted to authorized users registered in the base station; Thus, need is to provide a method allowing the user of a mobile equipment to get attachment to a base station while allowing the owner of the base station to easily manage the access rights to his base station.

In the state of the art, web applications allow to register and/or to authorize the attachment of a mobile equipment to a base station but such solution is not very practical for the users as it requires internet access and manual configuration through said internet access.

### SUMMARY OF THE INVENTION

It is therefore an object of the present invention to overcome the above cited drawbacks of the state of the art and provide a method that ease the management of a base station in order for the base station manager to control the base station access and for the base station clients to get attached to the base station.

Thus, the present invention refers to a method for managing the attachment process of a mobile equipment to a base station wherein the attachment process is configured by a call from the mobile equipment toward the line to which said base station is connected.

According to another embodiment, said base station is a pico or a femto base station.

According to an additional embodiment, said line is a digital subscriber line (DSL).

According to a further embodiment, the mobile equipment is pre-attached to the base station and the call is achieved through a radio link between the mobile equipment and the base station established during said pre-attachment.

According to another embodiment, said pre-attachment corresponds to the establishment of a radio link between the mobile equipment and the base station using a legacy attachment mechanism and providing restricted service to the mobile equipment.

According to an additional embodiment, said restricted service corresponds to a registration process access, said registration process allowing the mobile equipment to have access to an unrestricted service.

According to an additional embodiment, the mobile equipment calls the line to which said base station is connected in order to trigger said registration process.

According to a further embodiment, the registration process comprises the identification of the mobile equipment and the recording of said identified mobile equipment as authorized to have access to an unrestricted service.

According to another embodiment, the identification of the mobile equipment is achieved using the international mobile subscriber identity (IMSI) of the mobile equipment.

According to a further embodiment, a registration mode has to be activated to enable the registration process.

According to an additional embodiment, said registration mode can be activated or deactivated at the base station level.

According to another embodiment, said registration mode provides temporary registration and access for the mobile equipment to an unrestricted service through said base station during a predetermined amount of time or for a predetermined number of attachments.

According to an additional embodiment, said temporary registration mode can be configured, activated or deactivated at the base station level.

According to a further embodiment, an identifier of the mobile equipment triggering the registration process is provided by said base station in order to allow the control of the identity of a new authorized mobile equipment.

According to another embodiment, the mobile equipment is attached to an active base station of a mobile network, said active base station being different from the base station for which said mobile equipment is requesting registration, and the call is achieved through a connection provided by said active base station.

According to an additional embodiment, the registration process comprises the transmission to the mobile equipment, in response to the mobile equipment call, of attachment information enabling to perform the attachment of said mobile equipment to said base station.

According to another embodiment, said attachment information comprises at least one parameter among the following group:
- a cell ID corresponding to said base station;
- a cell frequency corresponding to said base station;
- scrambling codes corresponding to said base station;
- possible private access codes corresponding to said base station.

According to a further embodiment, the transmission of the attachment information is provided by the base station through a backhaul line.

According to an additional embodiment, the transmission of the attachment information is provided by the core network.

According to a further embodiment, said attachment information are memorized by the mobile equipment in order to perform future attachments to said base station.

According to an additional embodiment, the memorization by the mobile equipment of said attachment information leads to the introduction of the cell corresponding to the base station in the neighboring cell list.

According to another embodiment, an acknowledgement message is sent to the mobile equipment before said mobile equipment get access to an unrestricted service through said base station in order for the user of the mobile equipment to confirm or reject the registration of its mobile equipment to the base station.

According to a further embodiment, in case when the operators of the mobile equipment and the base station are different, the registration process comprises the transmission between the 2 operators and to the mobile equipment, in response to the mobile equipment call, of attachment information enabling to perform the attachment of the mobile equipment to the base station.

The present invention also refers to a base station comprising processing means adapted to perform:
- the reception of a call given by a mobile equipment;
- the identification of said mobile equipment and;
- the recording of said identified mobile equipment as an authorized mobile equipment.

According to another embodiment, said base station comprises a registration mode and processing means adapted to activate or deactivate said registration mode.

According to a further embodiment, said base station comprises processing means adapted to detect a mobile equipment which is not registered as an authorized mobile equipment and to provide to said mobile equipment a service restricted to a registration service allowing said mobile equipment to call the line corresponding to the base station in order to launch a registration process.

The present invention also refers to a base station comprising processing means adapted to perform:
- the reception of a call given by a mobile equipment and,
- the transmission, in response to a mobile equipment call being achieved through a connection independent of said base station, of attachment information enabling to perform the attachment of said mobile equipment to said base station.

### BRIEF DESCRIPTION OF THE DRAWINGS

FIG.**1** is a flowchart representing the different steps of an embodiment of the present invention;
FIG.**2** is a flowchart representing additional steps of an embodiment of the present invention;
FIG.**3** is a diagram of a communication network comprising different types of base stations;
FIG.**4** is a flowchart representing the different steps of another embodiment of the present invention;

### DETAILED DESCRIPTION OF THE INVENTION

As used herein, the term "pre-attachment" refers to the establishment of a radio link between a mobile equipment and a base station using a legacy attachment mechanism wherein said radio link provides restricted service to the mobile equipment;

As used herein, the term "mobile equipment" refers to an equipment such as a cell phone, a PDA, a laptop computer or any portable device allowing wireless communication.

As used herein, the term "legacy attachment mechanism" refers to attachment mechanism known in the state of the art and being possibly standardized;

The present invention refers to a method wherein an attachment process of a mobile equipment to a base station is configured by a call to the line to which said base station is connected.

Two different situations may appear and will be described in the following description.

### 1) First situation

In said situation, the mobile equipment is not initially connected to any base station and has therefore no communication access. Such situation may occur either when the mobile equipment is switched off or when no cell covers the location of the mobile equipment. The mobile equipment is then switched on and/or enter the area covered by the femto base station (FBS) to which the user wants to be attached. Moreover, the mobile equipment is not registered as authorized to use the FBS.

It has also to be noted that a FBS is used in the present description but the same method may be applied to any kind of base station.

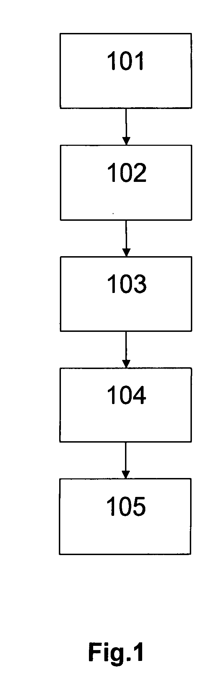

Fig.1 represents a flowchart of the different steps of a first embodiment of the present invention. The first step 101 corresponds to a scan of the surroundings and the search for the best cell, said scan and search being achieved by the mobile equipment.

Step 102 corresponds to the selection of the targeted femto cell as being the best cell and the sending to said targeted femto cell of an attachment request.

At step 103, a pre-attachment is achieved according to legacy attachment mechanism.

Nevertheless, full attachment, as it is the case with macro base station attachment when the macro base station corresponds to the operator of the mobile equipment, is not achieved because the femto base station is generally private and therefore a registration is needed in order for the femto base station manager to be able to control the access of the mobile equipments requesting attachment to his FBS.

Said pre-attachment corresponds to a radio link between the mobile equipment and the FBS but only a restricted service is provided to the mobile equipment. Said limited service refers to the possibility to call the Digital Subscriber Line (DSL-line) to which the FBS is connected in order to launch a registration process. Said call corresponds to step 104.

Besides, said pre-attachment may be time limited and a timer may be triggered at the time of the pre-attachment. In such case, the user of the mobile equipment has only a limited time (corresponding to the timer duration) to place a call towards the line to which the FBS is connected. If the timer elapsed before said call, the mobile equipment is disconnected.

As soon as the call is received by the FBS, a registration process corresponding to step 105 is launched. Said registration comprises the identification of the mobile equipment. According to a possible embodiment, the identification is achieved using the International Mobile Subscriber Identity (IMSI). The registration process leads to the registration of the mobile equipment as authorized. Thus, from this time, the mobile equipment may automatically get attached to the FBS each time it enters the coverage area of the corresponding femto cell. Moreover, it has to be noted that the identification of the mobile equipment may be achieved at a different time during the process, for example, said identification may be achieved during pre-attachment.

Moreover, according to another embodiment an additional step may be introduced between step 102 and 103 which refers to the activation of a registration mode necessary to allow a user to register to the FBS. Indeed, according to the previous embodiment, anybody knowing the phone number corresponding to the DSL Line of the FBS can get attached to the FBS. Thus, in order for the FBS manager to control the accessibility to his FBS, a registration mode needs to be activated by the FBS manager in order to allow a new mobile equipment to register to the FBS. Said registration may be activated or deactivated at the base station level, either through the use of a specific switch or through the selection of said registration mode in a configuration menu. Alternatively, remote configuration means may also be used.

If the registration mode is deactivated, the registration or attachment of a mobile equipment not previously registered is systematically refused.

If the registration mode is activated, then the user of the mobile equipment can launch the registration process by calling the DSL line as described previously.

Besides, for a mobile equipment previously registered as an authorized mobile equipment of the FBS, the activation or deactivation of the registration mode does not influence the attachment mechanism and the functioning of the FBS.

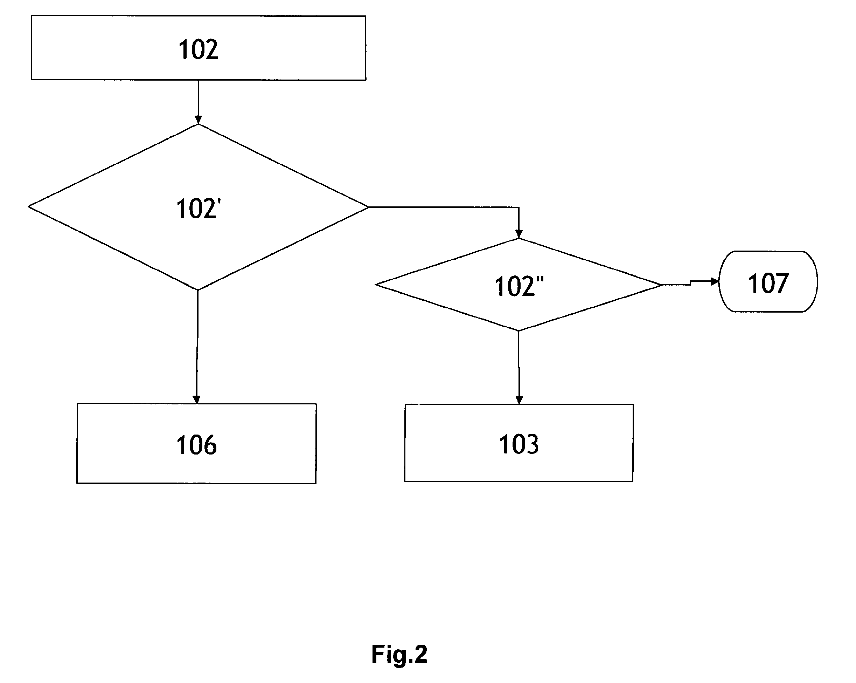

Fig.2 represents a flowchart of the additional steps. After the attachment request to the FBS (step 102, the FBS checks if the requesting mobile equipment is registered as authorized to use the FBS (step 102'). If the mobile equipment is already registered then attachment is achieved (step 106). Otherwise, the FBS checks if its registration mode is active (step 102"). If the registration mode is inactive, then the attachment process is aborted (step 107). Otherwise, the mobile is pre-attached for a given time and restricted service is provided to the mobile equipment (step 103).

According to a further embodiment, the registration of a mobile equipment as an authorized mobile equipment may be temporary. Said temporary registration corresponds to the possibility for a mobile equipment to get attached to the FBS only during a predetermined duration or for a predetermined number of attachments, the duration and/or the number of attachments being set by the FBS manager. Thus, if the temporary registration mode is activated by the FBS manager and the registration number of times is set to 3, any user registering to the FBS will be able to get attached to the FBS 3 times.

Such feature may be useful for example in the case where the FBS is used in a hotel. The FBS manager (who is for example the hotel manager or the receptionist) can set the registration time equals to the number of days the customers are staying in the hotel. Thus, the customers will be able to get attachment to the hotel FBS any time during their stay.

Moreover, the FBS manager may want to know the identity of a new registered mobile equipment. Therefore, in an additional embodiment, the identity of a mobile equipment requesting registration to the FBS is provided by the FBS to the FBS manager, for example by displaying the mobile equipment identifier on a screen (located on the FBS or a remote screen linked to the FBS through connection means or through a communication network) or a printed paper. Such feature allows the FBS manager to check that the registered mobile equipment is the expected one.

In the previous example, the hotel manager may check that the registered mobile equipment corresponds to the customers mobile equipment and that the FBS configuration (registration duration,...) corresponds to the customers situation.

Thus, in the previously described situation, a user of a mobile equipment being in the coverage area of a femto cell but being not registered as authorized and therefore having a restricted access to the FBS can launch a registration process to said FBS only using his mobile equipment by calling the line to which said FBS is connected. Moreover, according to the previously embodiments, the owner or manager of a private FBS can easily control the access of the mobile equipment requesting attachment to his FBS.

### 2) Second situation

In this second situation, the mobile equipment is initially connected to an active base station, for example a macro base station and has therefore communication access through said active base station. Nevertheless, the user of the mobile equipment may want to get attached to a FBS instead of the active (macro) base station for the reasons presented in the background of the invention part of the present description (economic reasons, signal quality reasons,...).

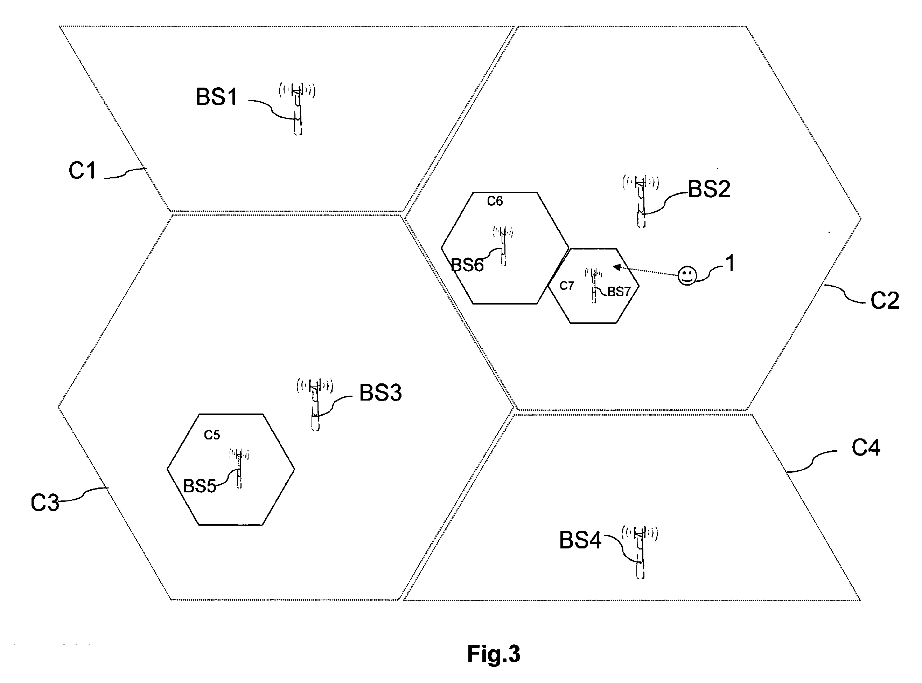

Fig.3 represents an example of a part of a network comprising macro cells such as C1, C2, C3 or C4, pico cell such as C5 or C6 and a femto cell C7. A user 1 equipped with a mobile equipment (not represented) is moving according to the direction of the dotted arrow.

Initially, said user is located in the macro cell C2 and is attached to the base station BS2. Then the user enters the area covered by the femto cell C7 which is also an area covered by cell C2.

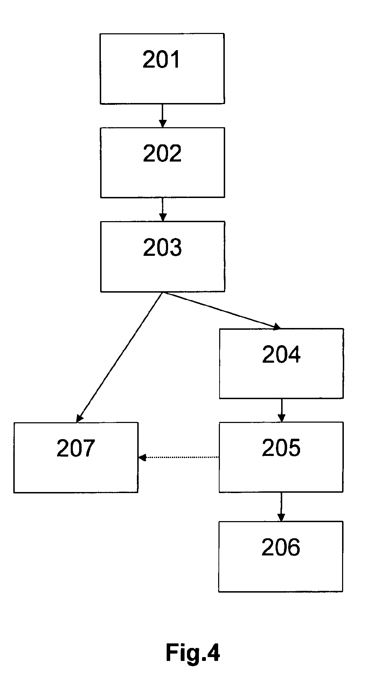

Fig.4 corresponds to the flowchart corresponding to the different steps of this embodiment. Step 201 corresponds to the introduction of the mobile equipment in the area covered by the femto cell C7. Nevertheless, for any of the reasons previously described in the description (better signal of the macro cell, non-detection of the femto cell...), the mobile equipment remains attached to BS2.

If the user wants to get attachment to BS7, he needs to cause the handover from cell C2 to cell C7. However, in order to cause such handover, the mobile requires attachment information. Said attachment information corresponds to information that will enable the mobile equipment to get attachment to the femto base station BS7. For example, such attachment information comprises a cell ID corresponding to the femto base station BS7, a cell frequency corresponding to BS7, scrambling codes corresponding to BS7 and possible private access codes corresponding to said base station.

Thus, according to the present embodiment, the user can request said attachment information by calling the DSL line, also called backhaul line, to which BS7 is connected. Indeed, the call to the DSL line, which corresponds to step 202, launches a registration process that will eventually allow the mobile equipment to handover from C2 to C7 thanks to the attachment information received.

Besides, it has to be noted that in this situation, the call to the DSL line is achieved thanks to the connection of the mobile equipment to the macro base station BS2.

The FBS (or the core network or the access gateway) determined if the calling mobile equipment is registered as authorized to use the FBS (step 203). If the mobile equipment is authorized then a call between the mobile equipment and the (wired) phone corresponding to the DSL line is established (step 207).If the mobile equipment has no authorization, the FBS (or the core network or the access gateway) answers to the call and sends to the mobile equipment said attachment information (step 204). Furthermore, it has to be noted that according to a further embodiment of the invention, an additional step corresponding to the verification of the activation of a registration mode can be achieved before step 204. In such embodiment, if the registration is deactivated, the registration process is aborted, otherwise the method goes to step 204.

Having the required information, the mobile equipment can get attachment to BS7 (step 205). After attachment, a call between the mobile equipment and the (wired) phone connected to the DSL line may be established (step 207). For example, a message can be sent to the mobile equipment to ask its user to be connected to the (wired) phone connected to the DSL line.

Moreover, said attachment information are memorized by the mobile equipment (step 206) in order to perform attachments to this FBS the next times the user will be in the coverage area of cell C7. Indeed, thanks to this information, cell C7 will then appear automatically in the neighbor list.

According to a further embodiment, an additional step preceding the attachment of the mobile equipment to the FBS corresponds to the sending of an acknowledgement message from the FBS or from equipments of the core network to the mobile equipment. Said message can be of any types (vocal, Short Message Service (SMS) message, electronic message,...) and confirm the registration to the FBS. Moreover, several options may be given to the user of the mobile equipment: accepting the registration, rejecting the registration or continuing the call with, for example, the wired home phone.

According to an alternate embodiment the attachment information may be sent directly by the core network instead of the FBS. Indeed, both BS2 and BS7 are connected to the core network, thus the call to the backhaul line of BS7 is transmitted by BS2 through the core network such that the core network may directly answer to the call and provide the attachment information requesting by the mobile equipment.

According to another embodiment, the operators of the mobile equipment and the FBS are different. In such case, the launching of the registration process by a call to the backhaul line of the FBS will comprises the transmission between the 2 operators, in response to the mobile equipment call, of attachment information to the mobile equipment, enabling to perform the attachment of the mobile equipment to the FBS, in order for the mobile equipment to be attached to the FBS and get services from the operator of the FBS. This will allow, for example, a given user visiting members of his family who have a FBS with a subscription to an operator different from said given user to get attachment to the FBS of his family members and get services communication services through the operator of the FBS.

Thus, this situation allows the user of a mobile equipment to request the attachment information of a targeted base station and consequently to cause the handover from the base station to which he is attached to the targeted FBS by simply calling the backhaul line to which the FBS is connected.

As a conclusion, the embodiments previously described allow a user of a mobile equipment to configure the attachment process to a base station by simply calling the backhaul line to which said base station is connected and therefore without requiring external tools or internet connection. Moreover, the registration of new mobile equipments to a base station may be easily controlled by the base station manager who is, in the case of a private FBS, the owner (or subscriber) of the FBS. Thus, by facilitating the attachment process to PBS or FBS which may be private, the embodiments previously described will allow the user to be able to get better services, to reduce their bills and for the operators to unload their macro cell networks thanks to the migration of users towards private PBS or FBS.

## Claims

1. Method for managing the attachment process of a mobile equipment to a base station wherein the attachment process is configured by a call from the mobile equipment toward the line to which said base station is connected.

2. Method for managing the attachment process of a mobile equipment to a base station in accordance with claim 1 wherein said base station is a pico or a femto base station.

3. Method for managing the attachment process of a mobile equipment to a base station in accordance with claim 1 or 2 wherein said line is a digital subscriber line (DSL).

4. Method for managing the attachment process of a mobile equipment to a base station in accordance with one of the previous claims wherein the mobile equipment is pre-attached to the base station and wherein the call is achieved through a radio link between the mobile equipment and the base station established during said pre-attachment.

5. Method for managing the attachment process of a mobile equipment to a base station in accordance with claim 4 wherein said pre-attachment corresponds to the establishment of a radio link between the mobile equipment and the base station using a legacy attachment mechanism and providing restricted service to the mobile equipment.

6. Method for managing the attachment process of a mobile equipment to a base station in accordance with claim 5 wherein said restricted service corresponds to a registration process access.

7. Method for managing the attachment process of a mobile equipment to a base station in accordance with claim 6 wherein the mobile equipment calls the line corresponding to the base station to which said mobile equipment is pre-attached in order to trigger said registration process.

8. Method for managing the attachment process of a mobile equipment to a base station in accordance with one of the claims from 4 to 7 wherein the registration process comprises the identification of the mobile equipment and the recording of said identified mobile equipment as authorized to have access to an unrestricted service.

9. Method for managing the attachment process of a mobile equipment to a base station in accordance with claim 8 wherein the identification of the mobile equipment is achieved using the international mobile subscriber identity (IMSI) of the mobile equipment.

10. Method for managing the attachment process of a mobile equipment to a base station in accordance with claim 8 or 9 wherein a registration mode has to be activated to enable the registration process.

11. Method for managing the attachment process of a mobile equipment to a base station in accordance with claim 10 wherein said registration mode can be activated or deactivated at the base station level.

12. Method for managing the attachment process of a mobile equipment to a base station in accordance with one of the claims from 4 to 11 wherein said registration mode provides temporary registration and access for the mobile equipment to an unrestricted service through said base station during a predetermined amount of time or for a predetermined number of attachments.

13. Method for managing the attachment process of a mobile equipment to a base station in accordance with claim 12 wherein said temporary registration mode can be configured, activated or deactivated at the base station level.

14. Method for managing the attachment process of a mobile equipment to a base station in accordance with one of the claims from 4 to 13 wherein an identifier of the mobile equipment triggering the registration process is provided by said base station in order to allow the control of the identity of a new authorized mobile equipment.

15. Method for managing the attachment process of a mobile equipment to a base station in accordance with claim 1 or 2 or 3 wherein the mobile equipment is attached to an active base station of a mobile network, said active base station being different from the base station for which said mobile equipment is requesting registration, and wherein the call is achieved through a connection provided by said active base station.

16. Method for managing the attachment process of a mobile equipment to a base station in accordance with claim 15 wherein the registration process comprises the transmission to the mobile equipment, in response to the mobile equipment call, of attachment information enabling to perform the attachment of said mobile equipment to said base station.

17. Method for managing the attachment process of a mobile equipment to a base station in accordance with claim 16 wherein said attachment information comprises at least one parameter among the following group:
- a cell ID corresponding to said base station;
- a cell frequency corresponding to said base station;
- scrambling codes corresponding to said base station;
- possible private access codes corresponding to said base station.

18. Method for managing the attachment process of a mobile equipment to a base station in accordance with claim 16 or 17 wherein the transmission of the attachment information is provided by the base station through a backhaul line.

19. Method for managing the attachment process of a mobile equipment to a base station in accordance with claim 16 or 17 wherein the transmission of the attachment information is provided by the core network.

20. Method for managing the attachment process of a mobile equipment to a base station in accordance with one of the claims from 16 to 19 wherein said attachment information are memorized by the mobile equipment in order to perform future attachments to said base station.

21. Method for managing the attachment process of a mobile equipment to a base station in accordance with claim 20 wherein the memorization by the mobile equipment of said attachment information leads to the introduction of the cell corresponding to the base station in the neighboring cell list.

22. Method for managing the attachment process of a mobile equipment to a base station in accordance with one of the claims from 16 to 21 wherein an acknowledgement message is sent to the mobile equipment before said mobile equipment get access to an unrestricted service through said base station in order for the user of the mobile equipment to confirm or reject the attachment of its mobile equipment to the base station.

23. Method for managing the attachment process of a mobile equipment to a base station in accordance with one of the claims from 15 to 22 wherein, in case when the operators of the mobile equipment and the base station are different, the registration process comprises the transmission between the 2 operators and to the mobile equipment, in response to the mobile equipment call, of attachment information enabling to perform the attachment of the mobile equipment to the base station.

24. Base station comprising processing means adapted to perform:
- the reception of a call given by a mobile equipment;
- the identification of said mobile equipment and;
- the recording of said identified mobile equipment as an authorized mobile equipment.

25. Base station in accordance with claim 24 wherein said base station comprises a registration mode and processing means adapted to activate or deactivate said registration mode.

26. Base station in accordance with claim 24 or 25 comprising processing means adapted to detect a mobile equipment which is not registered as an authorized mobile equipment and to provide to said mobile equipment a service restricted to a registration service allowing said mobile equipment to call the line corresponding to the base station in order to launch a registration process.

27. Base station comprising processing means adapted to perform:
- the reception of a call given by a mobile equipment and,
- the transmission, in response to a mobile equipment call being achieved through a connection independent of said base station, of attachment information enabling to perform the attachment of said mobile equipment to said base station.

## Amended claims

### Amended claims in accordance with Rule 137(2) EPC.

**1.** Method for managing the attachment process of a mobile equipment to a base station wherein the attachment process is configured by a call from the mobile equipment toward the line to which said base station is connected (104).

**2.** Method for managing the attachment process of a mobile equipment to a base station in accordance with claim 1 wherein said base station is a pico or a femto base station.

**3.** Method for managing the attachment process of a mobile equipment to a base station in accordance with claim 1 or 2 wherein said line is a digital subscriber line "DSL".

**4.** Method for managing the attachment process of a mobile equipment to a base station in accordance with one of the previous claims wherein the mobile equipment is pre-attached to the base station (103) and wherein the call is achieved through a radio link between the mobile equipment and the base station established during said pre-attachment.

**5.** Method for managing the attachment process of a mobile equipment to a base station in accordance with claim 4 wherein said pre-attachment corresponds to the establishment of a radio link between the mobile equipment and the base station using a legacy attachment mechanism and providing restricted service to the mobile equipment.

**6.** Method for managing the attachment process of a mobile equipment to a base station in accordance with claim 5 wherein said restricted service corresponds to a registration process access.

**7.** Method for managing the attachment process of a mobile equipment to a base station in accordance with claim 6 wherein the mobile equipment calls the line corresponding to the base station to which said mobile equipment is pre-attached in order to trigger said registration process.

**8.** Method for managing the attachment process of a mobile equipment to a base station in accordance with one of the claims from 4 to 7 wherein the registration process comprises the identification of the mobile equipment and the recording of said identified mobile equipment as authorized to have access to an unrestricted service.

**9.** Method for managing the attachment process of a mobile equipment to a base station in accordance with claim 8 wherein the identification of the mobile equipment is achieved using the international mobile subscriber identity "IMSI" of the mobile equipment.

**10.** Method for managing the attachment process of a mobile equipment to a base station in accordance with claim 8 or 9 wherein a registration mode has to be activated to enable the registration process.

**11.** Method for managing the attachment process of a mobile equipment to a base station in accordance with claim 10 wherein said registration mode can be activated or deactivated at the base station level.

**12.** Method for managing the attachment process of a mobile equipment to a base station in accordance with one of the claims from 4 to 11 wherein said registration mode provides temporary registration and access for the mobile equipment to an unrestricted service through said base station during a predetermined amount of time or for a predetermined number of attachments.

**13.** Method for managing the attachment process of a mobile equipment to a base station in accordance with claim 12 wherein said temporary registration mode can be configured, activated or deactivated at the base station level.

**14.** Method for managing the attachment process of a mobile equipment to a base station in accordance with one of the claims from 4 to 13 wherein an identifier of the mobile equipment triggering the registration process is provided by said base station in order to allow the control of the identity of a new authorized mobile equipment.

**15.** Method for managing the attachment process of a mobile equipment to a base station in accordance with claim 1 or 2 or 3 wherein the mobile equipment is attached to an active base station of a mobile network, said active base station being different from the base station for which said mobile equipment is requesting registration, and wherein the call (202) is achieved through a connection provided by said active base station.

**16.** Method for managing the attachment process of a mobile equipment to a base station in accordance with claim 15 wherein the registration process comprises the transmission to the mobile equipment, in response to the mobile equipment call, of attachment information enabling to perform the attachment of said mobile equipment to said base station (204).

**17.** Method for managing the attachment process of a mobile equipment to a base station in accordance with claim 16 wherein said attachment information comprises at least one parameter among the following group:
- a cell ID corresponding to said base station;
- a cell frequency corresponding to said base station;
- scrambling codes corresponding to said base station;
- possible private access codes corresponding to said base station.

**18.** Method for managing the attachment process of a mobile equipment to a base station in accordance with claim 16 or 17 wherein the transmission of the attachment information is provided by the base station through a backhaul line.

**19.** Method for managing the attachment process of a mobile equipment to a base station in accordance with claim 16 or 17 wherein the transmission of the attachment information is provided by the core network.

**20.** Method for managing the attachment process of a mobile equipment to a base station in accordance with one of the claims from 16 to 19 wherein said attachment information are memorized by the mobile equipment in order to perform future attachments to said base station.

**21.** Method for managing the attachment process of a mobile equipment to a base station in accordance with claim 20 wherein the memorization by the mobile equipment of said attachment information leads to the introduction of the cell corresponding to the base station in the neighboring cell list.

**22.** Method for managing the attachment process of a mobile equipment to a base station in accordance with one of the claims from 16 to 21 wherein an acknowledgement message is sent to the mobile equipment before said mobile equipment get access to an unrestricted service through said base station in order for the user of the mobile equipment to confirm or reject the attachment of its mobile equipment to the base station.

**23.** Method for managing the attachment process of a mobile equipment to a base station in accordance with one of the claims from 15 to 22 wherein, in case when the operators of the mobile equipment and the base station are different, the registration process comprises the transmission between the 2 operators and to the mobile equipment, in response to the mobile equipment call, of attachment information enabling to perform the attachment of the mobile equipment to the base station.

**24.** Base station comprising processing means adapted to receive a call from a mobile equipment on the line to which said base station is connected and launch an attachment process configuration at the reception of said call.

**25.** Base station in accordance with claim 24 comprising processing means adapted to perform:
- the reception of a call given by a mobile equipment;
- the identification of said mobile equipment and;
- the recording of said identified mobile equipment as an authorized mobile equipment.

**26.** Base station in accordance with claim 25 wherein said base station comprises a registration mode and processing means adapted to activate or deactivate said registration mode.

**27.** Base station in accordance with one of the previous claims comprising processing means adapted to detect a mobile equipment which is not registered as an authorized mobile equipment and to provide to said mobile equipment a service restricted to a registration service allowing said mobile equipment to call the line corresponding to the base station in order to launch a registration process.

**28.** Base station in accordance to claim 24 comprising processing means adapted to perform:
- the reception of a call given by a mobile equipment and,
- the transmission, in response to a mobile equipment call being achieved through a connection independent of said base station, of attachment information enabling to perform the attachment of said mobile equipment to said base station (204).
